(19) Europäisches Patentamt / European Patent Office / Office européen des brevets

(11) **EP 3 170 607 B1**

(12) **EUROPEAN PATENT SPECIFICATION**

(45) Date of publication and mention
of the grant of the patent:
**18.03.2020   Bulletin 2020/12**

(51) Int Cl.:
**B23K 9/02** *(2006.01)*      **B23K 9/025** *(2006.01)*
**B23K 9/18** *(2006.01)*      B23K 103/04 *(2006.01)*

(21) Application number: **15821482.5**

(22) Date of filing: **13.07.2015**

(86) International application number:
**PCT/JP2015/070060**

(87) International publication number:
**WO 2016/009996 (21.01.2016 Gazette 2016/03)**

(54) **TANDEM SUBMERGED ARC WELDING METHOD OF HIGH CR CSEF STEEL**

TANDEM-UNTERPULVERSCHWEISSVERFAHREN VON CSEF-STAHL MIT HOHEM CR-GEHALT

PROCÉDÉ DE SOUDAGE À L'ARC SUBMERGÉ TANDEM DE L'ACIER FERRITIQUE À RÉSISTANCE AU FLUAGE AMÉLIORÉE ET À HAUTE TENEUR EN CHROME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **18.07.2014   JP 2014147998**

(43) Date of publication of application:
**24.05.2017   Bulletin 2017/21**

(73) Proprietor: **Kabushiki Kaisha Kobe Seiko Sho (Kobe Steel, Ltd.)**
**Kobe-shi, Hyogo 651-8585 (JP)**

(72) Inventors:
• **IKAI, Kazuya**
  **Fujisawa-shi, Kanagawa 252-8551 (JP)**
• **YAMASHITA, Ken**
  **Fujisawa-shi, Kanagawa 252-8551 (JP)**

(74) Representative: **Müller-Boré & Partner**
**Patentanwälte PartG mbB**
**Friedenheimer Brücke 21**
**80639 München (DE)**

(56) References cited:
**EP-A2- 2 532 466      JP-A- 2005 329 415**
**JP-A- 2013 233 592**

**Description**

The present invention relates to a tandem submerged arc welding method of a high-Cr Creep Strength-Enhanced Ferritic (CSEF) steel according to the preamble of claim 1 (see for example JP 2005/329415 A1).

Thermal power boilers and turbines, and chemical reaction containers (reactors) for desulfurization or reformulation (heavy-oil decomposition) are used under a high temperature and a high pressure. Thus, examples of material suitable for this equipment include 1.25Cr-0.5Mo steel, 2.25Cr-1.0Mo steel, and 2.25Cr-1.0Mo-V steel. In recent years, the more effective use of heavy oil and the more efficient refining of petroleum have been required. Applications of a high-Cr CSEF steel having a Cr content of 8% by mass or more have been studied. Examples of the high-Cr CSEF steel include SA387Gr.91 and SA213Gr.T91 that are defined by American Society for Testing and Materials (ASTM) standard or American Society of Mechanical Engineers (ASME) standard.

Such thermal power boilers and turbines and reactors are produced by appropriately combining and welding forged rings or pipes and bent steel plates. Specifically, a forged ring can have a thickness of 150 to 450 mm, a maximum outer diameter of 7 m or less, and an entire length of several to several tens of meters. Examples of welding methods suitable for use in thermal power boilers and turbines and reactors include a shielded metal arc welding, a tungsten inert gas (TIG) welding, and a submerged arc welding. Among them, a submerged arc welding is used more often than other welding methods because of its high efficiency. To further improve the efficiency, there is proposed a submerged arc welding method that performs welding by using tandem electrodes. However, the tandem submerged arc welding for a high-Cr CSEF steel has a problem of hot cracking. To suppress the hot cracking and achieve the more effective welding in the submerged arc welding, the following techniques are disclosed.

For example, EP 2 532 466 A2 discloses a two-electrode welding method, in which a leading electrode is used to perform gas-shielded arc welding and a trailing electrode is an energized filler. The trailing electrode wire protrudes from a guide lead or guide tip and is energized from an energizing tip. The distance between a welding surface and the energizing tip is 100 mm or more and 1500 mm or less, and the distance between electrodes is 10 mm or less. The electric current of the leading electrode is 250 A or more, and the electric current of the trailing electrode is 10 A or more and 50% or less of the electric current of the leading electrode. The feeding speed of the trailing electrode wire is 20% or more and 50% or less of the feeding speed of the leading electrode wire.

Further, Patent Document 1 discloses a narrow-gap submerged arc welding method for performing submerged arc welding on a narrow groove with a groove width of 10 to 25 mm and a groove angle of 15 degrees or less in a one-layer-one-pass procedure. The method employs one electrode with 1.6 to 3.2 mmφ as a leading electrode and the other electrode with 4.0 to 4.8 mmφ as a trailed electrode with a distance between these electrodes set at 50 to 150 mm to carry out the welding using a sintered flux.

In this welding method, the distance between the electrodes for the tandem welding is set at 50 to 150 mm, thereby suppressing a bead shape ratio (bead depth H/bead width W). At this time, the leading electrode has a wire diameter of 1.6 to 3.2 mmφ, while the trailed electrode has a wire diameter of 4.0 to 4.8 mmφ. Such an arrangement suppresses the occurrence of hot cracking.

Patent Document 1: JP 60-177966 A

However, in the related art, the submerged arc welding has the following problems.

In the technique mentioned in Patent Document 1, welding solid wires in examples are made of soft steel. A welding solid wire that is made of the same material as a high-Cr steel has a larger amount of generated Joule heat, compared to the welding solid wire made of the same material as the soft steel, and thus leads to a larger welding amount, increasing the sensitivity to hot cracking in some cases. That is, it is difficult to solve the problem of hot cracking in the welding of a high-Cr CSEF steel only by the method mentioned in Patent Document 1. Furthermore, there is a risk that a slag formed by the leading electrode cannot be sufficiently molten by the trailed electrode. Thus, this method is not often suitable for parts that require high-quality welding, such as a girth weld for a reactor.

In order to perform welding on a thick plate with high efficiency, it is effective to increase a welding heat input by enhancing a welding current or an arc voltage, or decreasing a welding speed. However, when increasing the weld heat input, the bead shape, especially at a narrow groove, tends to take a pear shape, increasing the risk of occurrence of hot cracking. The hot cracking, which is the issue here, is the so-called solidification cracking caused by segregation of a low-melting point compound of P, S, Si and Nb contained in a weld metal, between dendrites or at an austenite crystal grain boundary in solidification, followed by imparting a welding contraction strain thereto.

As measures against the hot cracking, it is effective to adjust chemical components of a weld material, specifically, to reduce a concentration of impurities, including P and S, to 100 ppm or less by an extra high purity (EHP) fusion. However, the extra high purity fusion must use electron beam melting and a special furnace-wall refractory material, which is disadvantageous from an economical perspective. For this reason, a technique is required to be capable of suppressing the occurrence of hot cracking even at a normal impurity level.

Furthermore, in the submerged arc welding for a high-Cr CSEF steel, a main component of the wire might also cause hot cracking. That is, a solid wire for the submerged arc welding made of the same material as the high-Cr CSEF steel generates a large amount of Joule heat and has a large welding amount, compared with respective solid wires that are made of the same materials as 1.25Cr-0.5Mo, 2.25Cr-1.0Mo, and 2.25Cr-1.0Mo-V steels, which are conventionally used. Moreover, a weld metal produced using such a wire has a larger amount of solidification contraction, compared to that using 1.25Cr-0.5Mo, 2.25Cr-1Mo, and 2.25Cr-1Mo-V steel wires. That is, in the submerged arc welding for a high-Cr CSEF steel, only the adjustment of the chemical composition of a weld material cannot suppress hot cracking easily. The tandem submerged arc welding is also required to exhibit excellent slag removability and satisfactory bead state while improving the welding efficiency.

The present invention has been made in view of the foregoing circumstances. It is an object of the present invention to provide a welding method that can suppress the occurrence of hot cracking in a weld metal with satisfactory slag removability and bead state, while exhibiting excellent welding efficiency in the tandem submerged arc welding for a high-Cr CSEF steel.

As a result of diligent studies, the inventors have found that the occurrence of hot cracking can be suppressed by specifying the wire feeding speed, the welding speed, and the welding amount per unit length that is calculated by the ratio between both the wire feeding speed and the welding speed.

That is, the tandem submerged arc welding method of a high-Cr CSEF steel according to the present invention is defined in claim 1, and performs the welding under the conditions at a wire feeding speed $V_L$ of a leading electrode of 45 to 90 g/min; a wire feeding speed $V_T$ of a trailed electrode of 60 to 110 g/min; a welding speed v of 30 to 55 cm/min; and a welding amount per unit length of 2.8 to 3.8 g/cm.

Such a tandem submerged arc welding method for a high-Cr CSEF steel (hereinafter referred to as a "submerged arc welding method" or simply "welding method" as appropriate) specifies the wire feeding speed, welding speed, and welding amount per unit length, thereby suppressing the occurrence of hot cracking in a weld metal while improving the welding efficiency, bead state, and slag removability.

In the tandem submerged arc welding method for a high-Cr CSEF steel in the present invention, a welding wire preferably includes 0.03 to 0.13% by mass of C, 0.05 to 0.50% by mass of Si, 0.50 to 2.20% by mass of Mn, 0.015% by mass or less of P, 0.010% by mass or less of S, more than 0.20% by mass and 1.00% by mass or less of Ni, 8.00 to 10.50% by mass of Cr, 0.20 to 1.20% by mass of Mo, 0.05 to 0.45% by mass of V, 0.020 to 0.080% by mass of Nb, and 0.02 to 0.08% by mass of N, with the balance being Fe and inevitable impurities.

The welding method with this arrangement uses the welding wire containing a specific element, further improving the toughness and creep rupture strength of the weld metal.

In the tandem submerged arc welding method for a high-Cr CSEF steel in the present invention, the welding wire preferably further includes at least one of Cu, B, W and Co, wherein a Cu content is 1.70% by mass or less, a B content is 0.005% by mass or less, a W content is 2.0% by mass or less, and a Co content is 3.0% by mass or less, with the balance being Fe and inevitable impurities.

The welding method with this arrangement uses the welding wire containing a specific element, further improving the toughness and creep rupture strength of the weld metal.

In the tandem submerged arc welding method for a high-Cr CSEF steel in the present invention, preferably, a welding flux includes 10 to 60% by mass of $CaF_2$, 2 to 25% by mass of CaO, 10 to 50% by mass of MgO, 2 to 30% by mass of $Al_2O_3$, and 6 to 30% by mass of Si and $SiO_2$ in total (in terms of $SiO_2$), and a basicity represented by the following formula is in a range of 2.3 to 2.7:

$$\texttt{Basicity = (CaF}_2 \texttt{ + CaO + MgO + SrO + Na}_2\texttt{O + Li}_2\texttt{O + 1/2(MnO}$$

$$\texttt{+ FeO))/(SiO}_2 \texttt{ + 1/2(Al}_2\texttt{O}_3 \texttt{ + TiO}_2 \texttt{ + ZrO}_2\texttt{))}$$

where each compound indicates a content (% by mass) of the compound relative to the total mass of the flux.

The welding method with this arrangement can suppress the degradation in the bead outer appearance, bead shape, and toughness of the weld metal.

In the tandem submerged arc welding method for a high-Cr CSEF steel in the present invention, a distance between a tip and a base metal is preferably in a range of 20 to 40 mm.

The welding method with this arrangement can more surely suppress the erosion due to the arc from the tip and the excessive welding amount.

In the tandem submerged arc welding method for a high-Cr CSEF steel in the present invention, tip angles are preferably set such that a drag angle α is in a range from 0° to 50°, and a push angle β is in a range from 0° to 50°.

The welding method with this arrangement can more surely stabilize the welding-wire feeding speed.

In the tandem submerged arc welding method for a high-Cr CSEF steel in the present invention, a tip shape is preferably a straight tubing shape or a bent square tubing shape.

The welding method with this arrangement can ensure the wire feedability and the stabilization of a power-feeding position more reliably.

The tandem submerged arc welding method for a high-Cr CSEF steel according to the present invention can produce a weld metal that exhibits a satisfactory bead state as well as excellent slag removablity and resistance to hot cracking, while achieving the excellent welding efficiency in welding of the high-Cr CSEF steel.

Fig. 1 is a front view showing the states of a leading electrode and a trailed electrode in a welding method according to the present invention.
Fig. 2 is another front view showing the shape of a welding tip in the welding method of the present invention.
Fig. 3 is a side view of the welding tip shown in Fig. 2.
Fig. 4 is an end surface view of a tip-leading end side of the welding tip shown in Fig. 2.
Fig. 5 is a front view showing the state of the welding tip in the welding method of the present invention.
Fig. 6 is a front view showing another state of the welding tip in the welding method of the present invention.
Fig. 7 is a front view showing another state of the welding tip in the welding method of the present invention.
Fig. 8 is a front view showing another state of the welding tip in the welding method of the present invention.
Fig. 9 is a front view showing another state of the welding tip in the welding method of the present invention.
Fig. 10 is a front view showing another state of the welding tip in the welding method of the present invention.
Fig. 11 is a cross-sectional view showing a specimen used in Examples and an overlapped state of weld metals.
Fig. 12 is a cross-sectional view showing another specimen used in Examples and an overlapped state of weld metals.

Embodiments for implementing the present invention will be described in detail below.

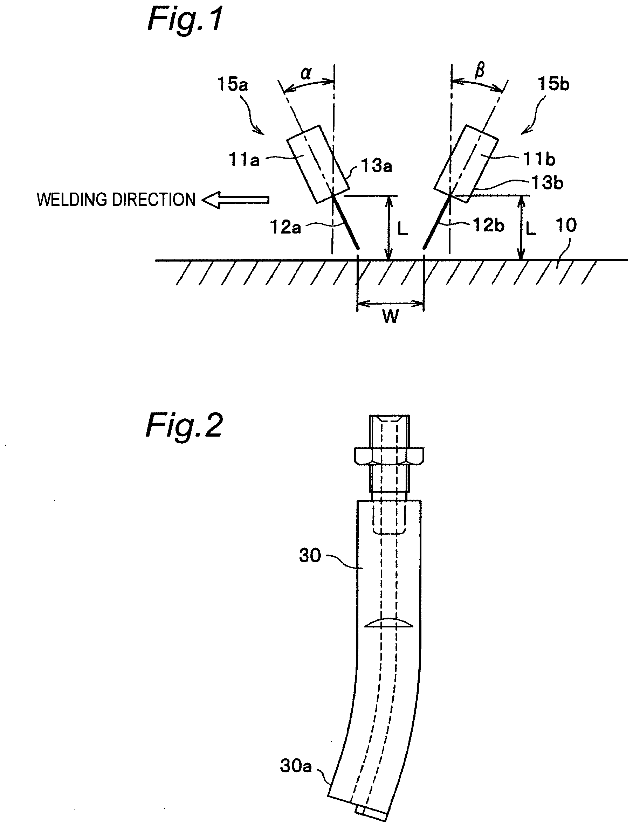

A welding method of the present invention is a tandem submerged arc welding method for a high-Cr CSEF steel. For example, as shown in Fig. 1, the tandem submerged arc welding method is a method that performs arc welding on a base metal 10 made of a high-Cr CSEF steel by using welding tips 11a and 11b with wires 12a and 12b inserted thereinto as well as a welding flux (not shown). That is, as illustrated in Fig. 1, in the welding method of the present invention, two electrodes, namely, a leading electrode 15a and a trailed electrode 15b are used to perform the welding.

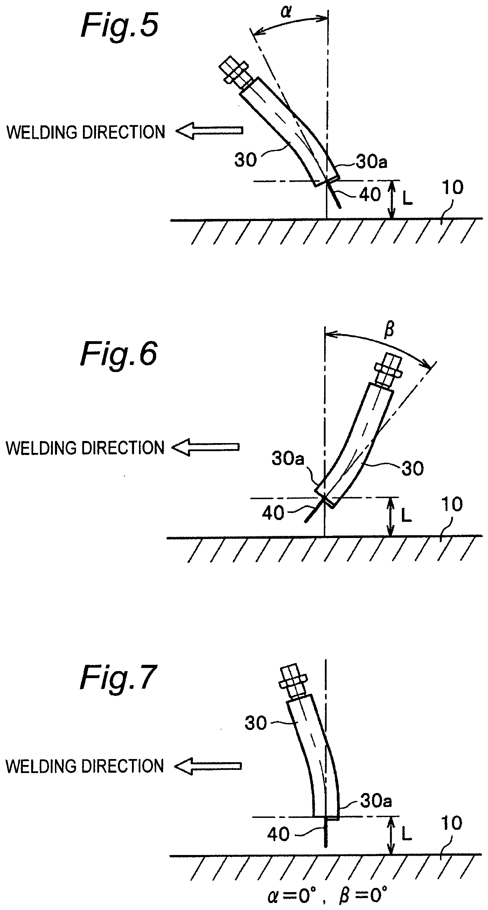

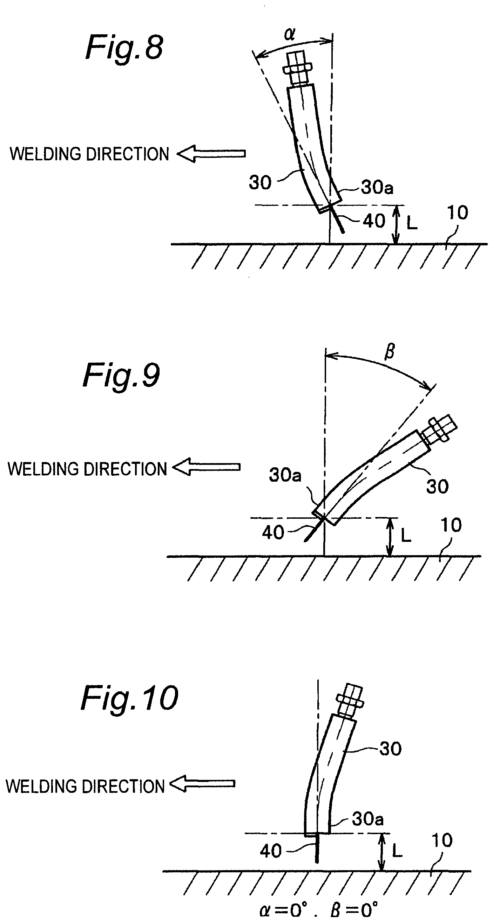

Note that Figs. 2 to 10 represent the leading electrode or trailed electrode, showing one electrode only for convenience.

The welding method in the present invention is performed on a high-Cr CSEF steel as a base metal (material to be welded). Examples of the high-Cr CSEF steels, which are in conformity with various standards, include SA387Gr.91, Gr.122, Gr.92, Gr.911 and SA213Gr.T91, which are defined by ASTM standard or ASME standard; X10CrMoVNb9-1 defined by EN standard; and SFVAF28, SFVAF29, STBA28, STPA28, and SCMV28, which are defined by Technical Standards for Thermal Power Generation Equipment-Interpretation of the Technical Standards of Thermal Power Equipment [Chapter 10 Welds], edited by Thermal and Nuclear Power Engineering Society. According to the present invention, the term "high-Cr" as used herein means that a Cr content is 8% by mass or more.

The chemical composition of the base metal preferably contains predetermined amounts of C, Si, Mn, P, S, Ni, Cr, Mo, V, Nb, Al, Ti, Zr and N with the balance being Fe and inevitable impurities. Further, the chemical composition of the base metal may contain a predetermined amount of Cu. Note that the contents of respective components in the base metal are determined relative to the entire base metal.

Specifically, the base metal contains 0.08 to 0.12% by mass of C, 0.20 to 0.50% by mass of Si, 0.30 to 0.60% by mass of Mn, 0.020% by mass or less of P, 0.010% by mass or less of S, 0.40% by mass or less of Ni, 8.00 to 9.50% by mass of Cr, 0.85 to 1..05% by mass of Mo, 0.18 to 0.25% by mass of V, 0.06 to 0.10% by mass of Nb, 0.02% by mass or less of Al, 0.01% by mass or less of Ti, 0.01% by mass or less of Zr, and 0.030 to 0.070% by mass of N, with the balance being Fe and inevitable impurities. The base metal may further contain 0.06% by mass or less of Cu.

An example of a method for suppressing the occurrence of hot cracking is one that involves restricting a heat input. However, the welding current and arc voltage tends to change its energy for use in melting the wire depending on welding environments, including a state of a workpiece and a conducting point. In other words, even when welding at the same heat input, the possibility of occurrence of hot cracking would differ. For this reason, the inventors have finally solved the problem by specifying the wire feeding speed, the welding speed and the welding amount per unit length.

That is, the welding method according to the present invention is the tandem submerged arc welding method for a high-Cr CSEF steel that is characterized by performing welding at a wire feeding speed $V_L$ of a leading electrode of 45 to 90 g/min; a wire feeding speed $V_T$ of a trailed electrode of 60 to 110 g/min; a welding speed v of 30 to 55 cm/min; and a welding amount per unit length of 2.8 to 3.8 g/cm. Now, a description will be given on the reasons for specifying the numerical ranges on the respective conditions.

<Wire Feeding Speeds: Wire Feeding Speed $V_L$ of the Leading electrode of 45 to 90 g/min; and Wire Feeding Speed $V_T$ of the Trailed electrode of 60 to 110 g/min>

When the wire feeding speed of the leading electrode is lower than 45 g/min, or when the wire feeding speed of the trailed electrode is lower than 60 g/min, the welding current becomes extremely low, making the arc unstable, which might cause penetration failure. On the other hand, when the wire feeding speed of the leading electrode exceeds 90 g/min, or when the wire feeding speed of the trailed electrode exceeds 110 g/min, the welding amount becomes extremely large, which might cause hot cracking, and degrading the slag removability. Thus, the wire feeding speeds are set such that the wire feeding speed $V_L$ of the leading electrode is in a range of 45 to 90 g/min; and the wire feeding speed $V_T$ of the trailed electrode is in a range of 60 to 110 g/min.

The wire feeding speed of the leading electrode is preferably 50 g/min or higher, and more preferably 55 g/min or higher from the viewpoint of suppressing the occurrence of penetration failure. The wire feeding speed of the leading electrode is preferably 85 g/min or lower, and more preferably 80 g/min or lower from the viewpoint of more effectively suppressing the occurrence of hot cracking and the degradation in slag removability. The wire feeding speed of the trailed electrode is preferably 65 g/min or higher, and more preferably 70 g/min or higher from the viewpoint of more effectively suppressing the occurrence of penetration failure. The wire feeding speed of the trailed electrode is preferably 105 g/min or lower, and more preferably 100 g/min or lower in terms of more effectively suppressing the occurrence of hot cracking and the degradation in slag removability.

Regarding the wire feeding speeds, when comparing the wire feeding speed range of the leading electrode with the wire feeding speed range of the trailed electrode, the wire feeding speed range of the leading electrode is smaller than that of the trailed electrode. Here, the amount of weld metal produced by the leading electrode is set smaller than that by the trailed electrode, which can make the bead depth smaller and the bead width larger, as compared to the case of setting the amount of weld metal by the leading electrode equal to that by the trailed electrode. Thus, this arrangement is advantageous from the viewpoint of hot cracking. Accordingly, the wire feeding speeds are preferably set as follows: leading electrode speed $V_L$ < trailed electrode speed $V_T$.

<Welding Speed v: 30 to 55 cm/min>

When a welding speed is lower than 30 cm/min, the welding amount is extremely large, which might cause hot cracking. On the other hand, when the welding speed exceeds 55 cm/min, the supply of a molten metal cannot catch up with the welding speed, making the bead shape unstable, which might result in lack of fusion and/or the occurrence of slag inclusions. Thus, the welding speed v is set at 30 to 55 cm/min. The welding speed is preferably set at 35 cm/min or higher from the viewpoint of more effectively suppressing the occurrence of hot cracking. Further, the welding speed is preferably 50 cm/min or lower in terms of stabilizing the bead shape and preventing the lack of fusion and slag inclusion. Note that the welding speed is a movement speed of the welding tips 11a and 11b of a welder in a welding direction as illustrated in Fig. 1.

<Welding Amount Per Unit Length: 2.8 to 3.8 g/cm>

A welding amount per unit length is calculated by "wire feeding speed/welding speed". That is, the welding amount per unit welding length is determined by the ratio of the wire feeding speed to the welding speed. Here, the wire feeding speed is the sum of the wire feeding speed of the leading electrode and the wire feeding speed of the trailed electrode. The point of the present invention is that the welding amount per unit length is controlled appropriately. When the welding amount per unit length is less than 2.8 g/cm, the welding amount becomes extremely small, worsening the welding efficiency. On the other hand, when the welding amount per unit length exceeds 3.8 g/cm, a stress generated by the contraction becomes larger. Furthermore, the bead shape takes a shape similar to the pear shape, so that the solidification direction of weld metal is horizontal with respect to the center of the bead, making the direction of a contraction force perpendicular to a finally solidified part. Thus, hot cracking is more likely to occur. Accordingly, the welding amount per unit length is set at 2.8 to 3.8 g/cm. The welding amount per unit length is preferably 2.9 g/cm or more, and more preferably 3.0 g/cm or more in terms of further improving the welding efficiency. The welding amount per unit length is preferably set at 3.7 g/cm or less, and more preferably 3.6 g/cm or less from the viewpoint of more effectively suppressing the occurrence of hot cracking.

Preferably, in addition to specifying the welding conditions as above, the welding method in the present invention uses a combination of a predetermined welding wire and a predetermined welding flux. Specifically, the welding wire contains predetermined amounts of C, Si, Mn, P, S, Ni, Cr, Mo, V, Nb and N with the balance being Fe and inevitable impurities, and has a predetermined wire diameter. The welding wire is not affected by the composition of the base metal, but preferably has substantially the same mechanical function as the base metal. Thus, the welding wire may contain a predetermined amount of Cu, B, W and/or Co (one or more elements selected from these four elements) as appropriate. The welding flux contains predetermined amounts of $CaF_2$, CaO, MgO, $Al_2O_3$, Si and $SiO_2$, and has a predetermined basicity. The welding wire and welding flux will be described below.

[Welding Wire]

Preferably, the welding wire used in the present invention contains 0.03 to 0.13% by mass of C, 0.05 to 0.50% by mass of Si, 0.50 to 2.20% by mass of Mn, 0.015% by mass or less of P, 0.010% by mass or less of S, more than 0.20% by mass and 1.00% by mass or less of Ni, 8.00 to 10.50% by mass of Cr, 0.20 to 1.20% by mass of Mo, 0.05 to 0.45% by mass of V, 0.020 to 0.080% by mass of Nb, and 0.02 to 0.08% by mass of N, and further contains a predetermined amount of Cu, B, W and/or Co (one or more selected from these four elements) as appropriate, with the balance being Fe and inevitable impurities, and has a wire diameter of 2.0 to 5.0 mm$\phi$. Now, a description will be given on the reasons for specifying the numerical ranges of the respective components. Note that the contents of respective components in the welding wire are determined relative to the entire welding wire.

<C: 0.03 to 0.13% by mass>

Carbon (C), together with N, binds to Cr, Mo, W, V, Nb and B, to precipitate various kinds of carbonitrides, and thereby has the effect of improving the creep rupture strength of a weld metal. When the C content is less than 0.03% by mass, the above-mentioned effect cannot be obtained sufficiently. On the other hand, when the C content becomes excessive, specifically, exceeds 0.13% by mass, hot cracking might occur in some cases. Thus, the C content in the welding wire is set at 0.03 to 0.13% by mass. The C content is preferably 0.04% by mass or more in terms of further improving the above-mentioned effect. The C content is preferably 0.12% by mass or less from the viewpoint of more effectively suppressing the occurrence of hot cracking.

<Si: 0.05 to 0.50% by mass>

Silicon (Si) serves as a deoxidizing agent and has the effect of reducing the volume of oxygen in a deposited metal to improve the toughness of a weld metal. Note that when the Si content is less than 0.05% by mass, the above-mentioned effect cannot be obtained sufficiently. On the other hand, since Si is a ferrite forming element, when the Si content becomes excessive, specifically, exceeds 0.50% by mass, the residual $\delta$-ferrite is induced in the weld metal, thus degrading the toughness of the weld metal. Thus, the Si content in the welding wire is set at 0.05 to 0.50% by mass. The Si content is preferably more than 0.05% by mass in terms of further improving the above-mentioned effect. To more effectively suppress the degradation in the toughness of the weld metal, the Si content is preferably set at 0.48% by mass or less, and more preferably 0.45% by mass or less.

<Mn: 0.50 to 2.20% by mass, and Ni: more than 0.20% by mass and 1.00% by mass or less>

Manganese (Mn) serves as a deoxidizing agent and has the effect of reducing the volume of oxygen in a deposited metal to improve the toughness of a weld metal. Mn and nickel (Ni) are austenite forming elements and both have the effect of suppressing degradation in the toughness of a weld metal due to the residual $\delta$-ferrite in the weld metal. Note that when the Mn content is less than 0.50% by mass, or when the Ni content is 0.20% by mass or less, these effects cannot be obtained, thus degrading the toughness of the weld metal. On the other hand, when the Mn content is more than 2.20% by mass, or when the Ni content is more than 1.00% by mass, the toughness of the weld metal is degraded. Thus, the Mn content in the welding wire is set at 0.50 to 2.20% by mass, and the Ni content in the welding wire is set at more than 0.20% by mass and 1.00% by mass or less. However, when the total content of Mn and Ni exceeds 1.50% by mass, the toughness of the weld metal is degraded, and simultaneously a transformation point $A_{c1}$ of a deposited metal is decreased, making it impossible to carry out a high-temperature tempering, failing to stabilize the microstructure of the weld metal. Thus, the total content of Mn and Ni is preferably set at 1.50% by mass or less.
The Mn content is preferably 0.55% by mass or more in terms of further improving the above-mentioned effect. To more effectively suppress the degradation in the toughness of a weld metal, the Mn content is preferably set at 2.15% by mass or less.
The Ni content is preferably 0.25% by mass or more, and more preferably 0.30% by mass or more in terms of further improving the above-mentioned effect. To more effectively suppress the degradation in the toughness of the weld metal, the Ni content is preferably less than 0.95% by mass.

<Cr: 8.00 to 10.50% by mass>

Chromium (Cr) is a main element of the high-Cr CSEF steel, which is to be welded by the welding wire used in the present invention. Cr is an essential element to ensure the resistance to oxidation and the high-temperature strength. Note that when the Cr content is less than 8.00% by mass, the resistance to oxidation and the high-temperature strength of a weld metal become insufficient. On the other hand, since Cr is a ferrite forming element, when the Cr content becomes excessive, specifically, exceeds 10.50% by mass, the residual δ-ferrite is induced, thus degrading the toughness of the weld metal. Thus, the Cr content in the welding wire is set at 8.00 to 10.50% by mass. With this arrangement, the excellent resistance to oxidation and high-temperature strength are achieved. The Cr content is preferably 8.05% by mass or more in terms of further improving the above-mentioned effect. To more effectively suppress the degradation in the toughness of the weld metal, the Cr content is preferably 10.45% by mass or less.

<Mo: 0.20 to 1.20% by mass>

Molybdenum (Mo) is a solid-solution strengthening element and has the effect of improving the creep rupture strength of a weld metal. When the Mo content is less than 0.20% by mass, the sufficient creep rupture strength cannot be obtained. On the other hand, since Mo is a ferrite forming element, when the Mo content becomes excessive, specifically, exceeds 1.20% by mass, the residual δ-ferrite is induced in a weld metal, thus degrading the toughness of the weld metal. Thus, the Mo content in the welding wire is set at 0.20 to 1.20% by mass. The Mo content is preferably 0.22% by mass or more in terms of further improving the above-mentioned effect. To more effectively suppress the degradation in the toughness of the weld metal, the Mo content is preferably 1.18% by mass or less.

<V: 0.05 to 0.45% by mass>

Vanadium (V) is a precipitation strengthening element and has the effect of precipitating as a carbonitride to improve the creep rupture strength of a weld metal. When the V content is less than 0.05% by mass, the sufficient creep rupture strength cannot be obtained. On the other hand, since V is also a ferrite forming element, when the V content becomes excessive, specifically, exceeds 0.45% by mass, the residual δ-ferrite is induced in a weld metal, thus degrading the toughness of the weld metal. Thus, the V content in the welding wire is set at 0.05 to 0.45% by mass. The V content is preferably 0.10% by mass or more in terms of further improving the above-mentioned effect. To more effectively suppress the degradation in the toughness of the weld metal, the V content is preferably 0.40% by mass or less.

<Nb: 0.020 to 0.080% by mass>

Niobium (Nb) is an element that contributes to the solid-solution strengthening and the stabilization of the creep rupture strength by being precipitated as a nitride. When the Nb content is less than 0.020% by mass, the sufficient creep rupture strength cannot be obtained. On the other hand, since Nb is also a ferrite forming element, when the Nb content becomes excessive, specifically, exceeds 0.080% by mass, the residual δ-ferrite is induced in a weld metal, thus degrading the toughness of the weld metal. Thus, the Nb content in the welding wire is set at 0.020 to 0.080% by mass. The Nb content is preferably 0.022% by mass or more in terms of further improving the above-mentioned effect. To more effectively suppress the degradation in the toughness of the weld metal, the Nb content is preferably 0.078% by mass or less.

<P: 0.015% by mass or less>

Phosphor (P) is an element that enhances the sensitivity to hot cracking of a weld metal. When the P content exceeds 0.015% by mass, hot cracking would occur in some cases. Thus, the P content in the welding wire is limited to 0.015% by mass or less. To more effectively suppress the occurrence of hot cracking, the P content is preferably 0.010% by mass or less.

<S: 0.010% by mass or less>

Sulfur (S) is an element that enhances the sensitivity to hot cracking of a weld metal. When the S content exceeds 0.010% by mass, hot cracking would occur in some cases. Thus, the S content in the welding wire is limited to 0.010% by mass or less. To more effectively suppress the occurrence of hot cracking, the S content is preferably 0.009% by mass or less.

<N: 0.02 to 0.08% by mass>

Nitrogen (N), together with C, binds to Cr, Mo, W, V, Nb and B, to precipitate various kinds of carbonitrides, and thereby has the effect of improving the creep rupture strength of a weld metal. However, when the N content is less than 0.02% by mass, the above-mentioned effect cannot be obtained sufficiently. On the other hand, when the N content becomes excessive, specifically, exceeds 0.08% by mass, slag removability is degraded. Thus, the N content in the welding wire is set at 0.02 to 0.08% by mass. The N content is preferably 0.03% by mass or more in terms of further improving the creep rupture strength. Further, the N content is preferably 0.07% by mass or less in terms of improving the slag removability.

Next, a description will be given on the reasons for specifying the numerical ranges of Cu, B, W and Co, which may be contained in predetermined amounts in the welding wire as appropriate.

<Cu: 1.70% by mass or less>

Copper (Cu) may be contained in the welding wire because it is an austenite forming element and has the effect of suppressing degradation in the toughness of a weld metal due to the residual δ-ferrite of the weld metal. On the other hand, any excessive Cu content might cause hot cracking in some cases. Thus, the Cu content is set at 1.70% by mass or less. The upper limit of Cu is preferably 1.0% by mass, and more preferably 0.5% by mass . A method for containing Cu in the welding wire may be plating onto a wire surface.

<B: 0.005% by mass or less>

Boron (B) may be contained in the welding wire because B has the effects of dispersing and stabilizing carbide particles when added even in a small amount and enhancing the creep rupture strength of a weld metal. On the other hand, any excessive B content might cause hot cracking in some cases. Thus, the B content is set at 0.005% by mass or less. The upper limit of B is preferably 0.003% by mass, and more preferably 0.0015% by mass .

<W: 2.0% by mass or less>

Tungsten (W) may be contained in the welding wire because W is an element that contributes to the stabilization of the creep rupture strength by the solid-solution strengthening of a matrix and precipitation of fine carbide particles. On the other hand, since W is also a ferrite forming element, any excessive W content induces the degradation in the toughness of a weld metal due to the residual δ-ferrite in the weld metal. Thus, the W content is set at 2.0% by mass or less. The upper limit of W is preferably 1.8% by mass, and more preferably 1.7% by mass.

<Co: 3.0% by mass or less>

Cobalt (Co) may be contained in the welding wire because Co is an element that suppresses the residual δ-ferrite. On the other hand, any excessive Co content decreases a transformation $A_{c1}$ point, making it impossible to carry out a high-temperature tempering, failing to stabilize the microstructure of the weld metal. Thus, the Co content is set at 3.0% by mass or less. The upper limit of Co is preferably 2.0% by mass, and more preferably 1.8% by mass.

<Balance: Fe and inevitable impurities>

The remaining components of the welding wire are composed of Fe and inevitable impurities. Examples of inevitable impurities can include Ti and Al.

<Wire Diameter of Welding Wire>

The wire diameter of the welding wire used in the present invention is preferably set at 2.0 to 5.0 mmϕ. When the wire diameter of each wire is less than 2.0 mmϕ, the sufficient welding amount cannot be obtained, which sacrifices the welding efficiency. On the other hand, when the wire diameter exceeds 5.0 mmϕ, the welding amount is large even by the above-mentioned arrangements for the welding conditions, failing to suppress the occurrence of hot cracking in some cases.

[Welding Flux]

<$CaF_2$ in the flux: 10 to 60 % by mass>

$CaF_2$ decreases a melting point of a slag to enhance its fluidity, and thus has the effect of adjusting the bead shape. Note that when the $CaF_2$ content is lacking, the above-mentioned effect cannot be obtained sufficiently, while any excessive $CaF_2$ content makes a ripple of the bead surface non-uniform and rough, degrading the wettability. Thus, the $CaF_2$ content in the welding flux is set at 10 to 60% by mass.

<CaO in the flux: 2 to 25% by mass>

CaO has the effect of adjusting the viscosity of a slag to control the bead shape. Note that when the CaO content is lacking, the above-mentioned effect cannot be obtained sufficiently, while any excessive CaO content may generate pock marks on the bead surface, thus degrading the wettability. Thus, the CaO content in the flux is set at 2 to 25% by mass.

<MgO in the flux: 10 to 50% by mass>

Like CaO, MgO has the effect of controlling the viscosity of a slag to adjust the bead shape. Note that when the MgO content is lacking, the above-mentioned effect cannot be obtained sufficiently, while any excessive MgO content may generate pock marks on the bead surface, thus degrading the wettability. Thus, the MgO content in the flux is set at 10 to 50% by mass.

<$Al_2O_3$ in the flux: 2 to 30% by mass>

$Al_2O_3$ has the effect of adjusting the fluidity of a slag by increasing the melting point of the slag to control the bead shape. Note that when the $Al_2O_3$ content is lacking, the above-mentioned effect cannot be obtained sufficiently, while any excessive $Al_2O_3$ content may cause burning of the slug onto a weld zone. Thus, the $Al_2O_3$ content in the welding flux is set at 2 to 30% by mass.

<The total of Si and $SiO_2$ in the welding flux: 6 to 30% by mass in total (in terms of $SiO_2$)>

Silicon (Si) has the effect of adjusting the viscosity of a slag to control the bead shape. Note that when the Si content is lacking, the above-mentioned effect cannot be obtained sufficiently, while when the Si content is excessive, Si is subjected to reduction under an arc atmosphere to increase the Si content in the weld metal, causing burning of the slug onto a weld zone. The same goes for Si that is appropriately added as a deoxidizing agent into the welding flux. For this reason, it is necessary to limit the total content of Si and $SiO_2$ in the welding flux, including $SiO_2$ in a liquid glass that is used as a fixing agent during granulation of the flux. Accordingly, the total content of Si and $SiO_2$ in the flux is set at 6 to 30% by mass in terms of $SiO_2$.

As can be seen from the outline mentioned above, the term "total of Si and $SiO_2$" as used herein means the total amount of Si in the form of $SiO_2$ and Si in any form other than $SiO_2$. The "total of Si and $SiO_2$" represented "in terms of $SiO_2$" is obtained by determining an amount of $SiO_2$ for Si in the form of $SiO_2$, while determining an amount of Si in the forms other than $SiO_2$ and then converting the determined amount of Si into an amount of $SiO_2$, followed by summing both the determined amounts of $SiO_2$.

The above description has been given on the preferable components of the flux. These preferable components can be added alone or in combination as a compound containing some of them, or in the form of mineral or a molten flux. For example, $CaF_2$ may be added as fluorite; CaO as lime and a molten flux; MgO as magnesia clinker and a molten flux; $Al_2O_3$ as alumina and a molten flux; and $SiO_2$ as potassium feldspar, soda feldspar and a molten flux. To the flux, an alloy powder, an oxide and a fluoride can be added as appropriate, in addition to the above-mentioned essential components, in order to adjust the alloy composition and the welding workability.

The basicity of the flux for the submerged arc welding used in the present invention is preferably in a range of 2.3 to 2.7. When the basicity is less than 2.3, the amount of oxygen in the weld metal is not decreased sufficiently, whereby the weld metal has low toughness. On the other hand, when the basicity exceeds 2.7, the bead outer appearance and the bead shape are degraded. Thus, the basicity is set in a range of 2.3 to 2.7. To more effectively suppress the degradation in the toughness of the weld metal, the basicity is preferably 2.4% by mass or more. To more effectively suppress the degradation in the bead outer appearance and the bead shape, the basicity is preferably 2.6% by mass or less.

Note that the basicity in the present invention is represented by formula (1) below.

$$Basicity = (CaF_2 + CaO + MgO + SrO + Na_2O + Li_2O + 1/2(MnO + FeO))/(SiO_2 + 1/2(Al_2O_3 + TiO_2 + ZrO_2)) \quad (1)$$

where each compound indicates a content (% by mass) of the compound relative to the total mass of the flux.

In addition to the above-mentioned welding conditions, the welding method in the present invention preferably sets a tip-base metal distance, a tip shape and a tip angle to predetermined values or features.

<Tip-Base Metal Distance>

As mentioned above, a wire for the submerged arc welding that is the same as the high-Cr CSEF steel has a higher electric resistance, compared to solid wires that are made of the same material as 1.25Cr-0.5Mo steel, 2.25Cr-1Mo steel, and 2.25Cr-1Mo-V steel. Thus, this wire generates a larger amount of Joule heat, thus increasing the welding amount. That is, the use of the wire made of the same material as the high-Cr CSEF steel leads to a larger welding amount even at the same welding current, easily causing hot cracking. The amount of generated Joule heat becomes larger as the distance between each of the welding tips 11a, 11b and 30 and the base metal 10 is increased, which are illustrated in Figs. 1, 5 to 7 and 8 to 10. Therefore, to further suppress the occurrence of hot cracking, a tip-base metal distance L is preferably controlled to be in a range of 20 to 40 mm. When the tip-base metal distance L is less than 20 mm, tip leading-end 13a, 13b or 30a of the tip might be eroded by the arc. When the tip-base metal distance L exceeds 40 mm, the welding amount might become excessive. The tip-base metal distance L is preferably 25 mm or more in order to further suppress the erosion of the tip leading-ends 13a, 13b and 30a, and 35 mm or less in order to further suppress the excessive welding amount. The tip-base metal distance of the trailed electrode should be set to be larger than that of the leading electrode to prevent the tip of the trailed electrode from coming into contact with the welding bead formed by the leading electrode.

Here, as shown in Figs. 1, 5 to 7 and 8 to 10, the tip-base metal distance is the distance L extending vertically between the base metal 10 and the tip leading end 13a, 13b or 30a where the wire 12a, 12b or 40 finally protrude from the welding tip 11a, 11b or 30.

<Tip Shape>

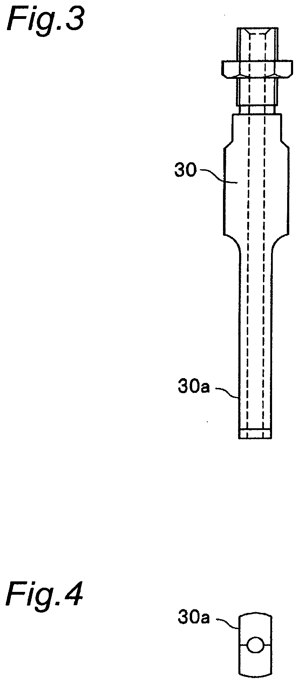

The tip shape may have a straight tubing shape shown in Fig. 1, a bent square tubing shape shown in Figs. 2 to 4, or the shape shown in Fig. 3b of Japanese Patent Publication No. S62 (1987)-58827. The tip shape is selected as appropriate in terms of ensuring the wire feedability and the stabilization of a power-feeding position. Particularly, as illustrated in Figs. 2 to 4, in a bent square tubing-shaped tip in which the tip leading end 30a is bent in a range not interrupting the wire feed, a power-feeding position is stabilized. Consequently, the wire feeding speed is stabilized.

<Tip Angle>

As shown in Figs. 1, 5 to 7 and 8 to 10, the tip angles are defined as an angle that is formed by a line vertical to the surface of the base metal 10 and each of axis lines of the tip leading ends 13a, 13b and 30a from which the respective wires 12a, 12b and 40 are finally protruded from the welding tips 11a, 11b and 30. The tip angles influence the degree of heating of the welding wires with welding arc, thus consequently increasing or decreasing the wire feeding speed. Specifically, for the same welding current and the same tip-base metal distance L, the wire feeding speed at a push angle $\beta$ (see Figs. 1, 6 and 9) becomes higher than that at a drag angle $\alpha$ (see Fig. 1, 5 and 8). For this reason, the tip angles influence the degree of heating of the welding wires with welding arc, thus consequently increasing or decreasing the welding amount. To stabilize the wire feeding speed, preferably, the tip angle of the leading electrode is controlled to have the drag angle $\alpha$ in a range of 0° to 50°, while the tip angle of the trailed electrode is controlled to have the push angle $\beta$ in a range of 0° to 50°.

As illustrated in Figs. 1, 6, and 9, the term "push angle" as used herein means an angle formed by an inclined wire and a vertical line drawn from a point where the wire is exposed from the tip leading-end 11b up to a welding line, provided that the welding is performed with the wire inclined in the direction opposite to the welding travel direction with respect to the vertical line.

As illustrated in Figs. 1, 5, and 8, the term "drag angle" as used herein means an angle formed by an inclined wire and a vertical line drawn from a point where the wire is exposed from the tip leading-end 11a up to a welding line, provided that the welding is performed with the wire inclined in the welding travel direction with respect to the vertical line.

Note that reference character W in Fig. 1 denotes a distance between the electrodes. The distance W is a distance in the horizontal direction between the leading end of the wire 12a of the leading electrode 15a and the leading end of the wire 12b of the trailed electrode 15b.

The power source characteristics and power source polarity in the welding method of the present invention will be described below.

The power source characteristics may be either drooping characteristics or constant-voltage characteristics. The term "drooping characteristics" as used herein means the characteristics of a power source that can weld stably with less changes in welding current even if an arc length is varied. Specifically, when the arc length becomes long, the wire feeding speed is temporarily increased, while when the arc length becomes short, the wire feeding speed is decreased, whereby the current is stabilized to a constant value. The power source polarity may be either direct current electrode positive (DCEP) or alternating current (AC).

Note that the welding current and the arc voltage are adjusted as means for controlling the above-mentioned wire feeding speed in an appropriate range.

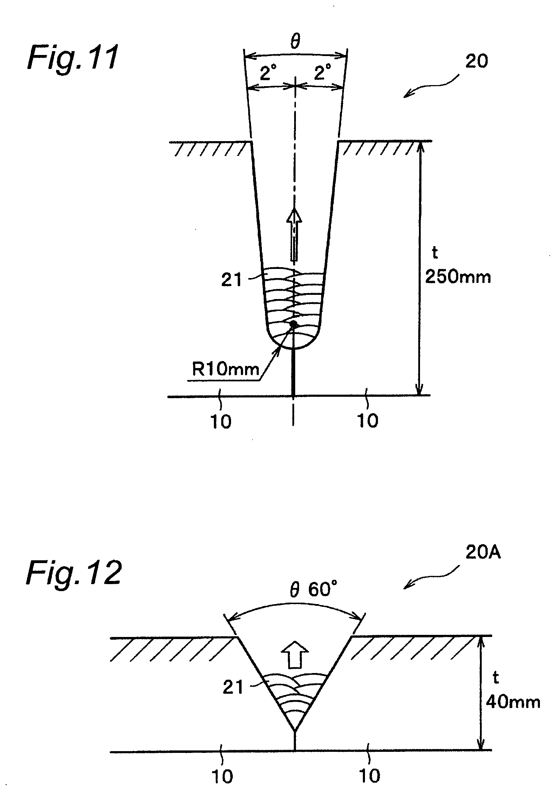

The welding method in the present invention is preferably applied to thermal power boilers and turbines, and reactors as mentioned above. Thus, the thickness of the base metal is preferably set at 150 to 450 mm. However, the welding method of the present invention can also be applied to welding for a base metal of less than 150 mm in thickness. Similarly, in the welding method of the present invention, the preferable target to be welded is a narrow groove with the shape shown in Fig. 11 as the groove shape of the base metal. However, the welding method in the present invention can also be applied to a V groove shown in Fig. 12 and an X groove (not shown).

Here, in the present invention, the narrow groove of the base metal 10 is defined as one with a thickness t of 50 mm or more and a groove angle $\theta$ of 0 to 5° (see Fig. 11). For example, a specimen 20 shown in Fig. 11, which was used in Examples to be mentioned later, has a thickness t of 250 mm and a groove angle $\theta$ of 4°(= 2°+ 2°).

Examples

Regarding Examples falling within the scope of the present invention, their effects will be described below by comparison with Comparative Examples deviating from the scope of the present invention.

First, three types of base metals of high-Cr CSEF steels were prepared by using chemical compositions shown in Table 1. As shown in Fig. 11, a narrow groove with a thickness t of 250 mm, a curvature radius R of a groove bottom of 10 mm, and a groove angle $\theta$ of 4° (= 2° + 2°) was formed in the base metals by machining, thereby producing a specimen 20. Alternatively, as shown in Fig. 12, a V groove with a groove angle $\theta$ of 60° was formed in the base metals, thereby producing a specimen 20A.

Then, three types of welding wires with chemical compositions shown in Table 2 were used. It should be noted that 0.01% by mass of Cu in a wire shown in Table 2 was considered to be contained as an inevitable impurity. Furthermore, three types of fluxes with particle sizes and chemical compositions shown in Table 3 were used.

[Table 1]

| Base metal chemical composition (% by mass) | | | | | | | | | | | | | | | |
|---|---|---|---|---|---|---|---|---|---|---|---|---|---|---|---|
| Type | C | Si | Mn | P | S | Cu | Ni | Cr | Mo | V | Nb | Al | Ti | Zr | N | Balance |
| B-1 | 0.100 | 0.26 | 0.51 | 0.010 | 0.001 | 0.03 | 0.33 | 8.90 | 0.95 | 0.21 | 0.07 | 0.004 | 0.002 | 0.001 | 0.060 | Fe |
| B-2 | 0.090 | 0.33 | 0.45 | 0.012 | 0.002 | 0.06 | 0.33 | 9.10 | 1.01 | 0.22 | 0.06 | 0.003 | 0.003 | 0.001 | 0.070 | Fe |
| B-3 | 0.110 | 0.27 | 0.42 | 0.010 | 0.001 | 0.06 | 0.33 | 8.78 | 0.92 | 0.22 | 0.07 | 0.004 | 0.003 | 0.002 | 0.065 | Fe |
| *Others, inevitable impurities | | | | | | | | | | | | | | | |

[Table 2]

| Wire chemical composition (% by mass) | | | | | | | | | | | | | |
|---|---|---|---|---|---|---|---|---|---|---|---|---|---|
| Type | C | Si | Mn | P | S | Cu | Ni | Cr | Mo | V | Nb | N | Balance |
| W-1 | 0.045 | 0.15 | 1.83 | 0.004 | 0.005 | 0.01 | 0.61 | 8.76 | 0.90 | 0.24 | 0.056 | 0.035 | Fe |
| W-2 | 0.070 | 0.05 | 0.65 | 0.004 | 0.005 | 0.01 | 0.31 | 10.00 | 1.20 | 0.15 | 0.025 | 0.032 | Fe |
| W-3 | 0.060 | 0.25 | 0.92 | 0.004 | 0.005 | 0.01 | 0.88 | 9.25 | 0.95 | 0.37 | 0.070 | 0.047 | Fe |
| *Others, inevitable impurities | | | | | | | | | | | | | |

Table 3

| Flux chemical composition (% by mass), Particle size | | | | | | | | | | |
|---|---|---|---|---|---|---|---|---|---|---|
| | | Chemical composition (% by mass) | | | | | | | | |
| Type | particle sizes mesh | $CaF_2$ | CaO | MgO | $Al_2O_3$ | Si and $SiO_2$ (in total in terms of $SiO_2$) | BaO | $ZrO_2$ | $TiO_2$ | Others |
| F-1 | 10 × 48 | 14.9 | 7.4 | 29.0 | 22.6 | 15.2 | - | 2.4 | - | 8.5 |
| F-2 | 10 × 48 | 11.7 | 7.2 | 27.0 | 19.5 | 16.3 | 5.4 | 1.7 | - | 11.2 |
| F-3 | 10 × 48 | 13.0 | 8.9 | 29.0 | 20.0 | 15.0 | 2.4 | - | 3.5 | 8.2 |

*The term particle size means a typical range of a flux, specifically, "10 (upper limit) × 48 (lower limit)" based on the expression of "mesh" mentioned in JIS Z3352 (submerged arc welding flux).
*Others include at least one of SrO, $Na_2O$, $Li_2O$, MnO, and $FeO_2$.
*The mark "-" indicates the component is not contained.

Submerged arc welding was performed on the inside of the narrow groove of the specimen 20 in each sample as shown in Fig. 11, or the V groove of the specimen 20A shown in Fig. 12 by using the wire mentioned in Table 2 and the flux mentioned in Table 3 while changing the wire feeding speed and welding speed. The wire feeding speed was controlled by changing the welding current and welding speed. In this welding, welding metals 21 were overlapped in the direction indicated by the arrow in the figures.

The welding conditions were as follows. Other conditions are shown in Tables 4 and 5. Note that in Tables 4 and 5, components not satisfying the requirements of the present invention are underlined. The groove shape "G-1" indicates the narrow groove of the specimen 20, while the groove shape "G-2" indicates the V groove of the specimen 20A.

<Welding Conditions>

Wire Diameter: 4 mmφ
Welding Tip: a leading-end bent tip (bent square tubing-shaped tip) shown in Figs. 2 to 4
Distance between the Electrodes: 20 mm
Polarity: AC-AC tandem
Welding Position: Flat
Overlapping Method:

    One pass in an initial layer and one-layer-two-pass procedure in subsequent layers (see Fig. 11)
    One pass from an initial layer to third layer, and one-layer-two-pass procedure in subsequent layers (see Fig. 12)

The welded specimens 20 and 20A in Examples were evaluated for the slag removability, bead state, welding efficiency and resistance to hot cracking.

<Evaluation of Slag Removability>

The flux stuck to the bead surface after the end of the welding was tapped with a hammer three times. Examples in which a slag was easily removed were graded pass (P), while Examples in which a slag was not removed were graded fail (F).

<Evaluation of Bead State>

The outer appearance of the surface of the weld bead obtained after removing the slag in the evaluation of the slag removability was observed visually. Examples with no weld defects were graded pass (P), while Examples with any weld defect or with unstable bead shape were graded fail (F).

<Evaluation of Welding Efficiency>

Regarding the welding efficiency, Examples in which welding was allowed in two passes per layer as the overlapping method were graded pass (P), while Examples that needed welding in three or more passes per layer because of a small welding amount were graded fail (F).

<Evaluation of Resistance to Hot Cracking>

Within a range of 300 mm of a weld bead other than the start and end parts thereof (which indicated parts at a distance of 100 mm from both ends of the weld bead), the microstructure of the cross-section of each piece obtained by cutting the weld bead every 50 mm was observed. Examples in which no cracking occurred in all five cross-sections were graded pass (P), while Examples in which cracking occurred were graded fail (F).
These results are shown in Tables 4 and 5. Note that in these tables, the mark "-" indicates Example in which no evaluation was made.

[Table 4]

| No. | Base metal | Wire | Flux | Groove shape | Leading electrode | | | | Trailed electrode | | | |
|---|---|---|---|---|---|---|---|---|---|---|---|---|
| | | | | | Welding current (A) | Arc voltage (V) | Tip angle ° | Tip-Base metal distance mm | Welding current (A) | Arc voltage (V) | Tip angle (°) | Tip-Base metal distance (mm) |
| No. 1 | B-1 | W-1 | F-1 | G-1 | 335 | 29 | Drag angle 0° | 25 | 330 | 30 | Push angle 25° | 30 |
| No. 2 | B-1 | W-2 | F-2 | G-1 | 355 | 29 | Drag angle 0° | 25 | 340 | 30 | Push angle 25° | 30 |
| No. 3 | B-1 | W-1 | F-2 | G-1 | 380 | 30 | Drag angle 0° | 25 | 365 | 31 | angle 25° | 30 |
| No. 4 | B-2 | W-3 | F-3 | G-1 | 380 | 30 | Drag angle 0° | 20 | 365 | 31 | Push angle 25° | 25 |
| No. 5 | B-2 | W-3 | F-2 | G-1 | 380 | 30 | Drag angle 0° | 35 | 365 | 31 | Push angle 25° | 40 |
| No. 6 | B-3 | W-2 | F-1 | G-1 | 415 | 30 | Drag angle 10° | 25 | 405 | 31 | angle 45° | 30 |
| No. 7 | B-1 | W-3 | F-1 | G-2 | 440 | 30 | Drag angle 40° | 30 | 425 | 31 | Push angle 20° | 35 |
| No. 8 | B-1 | W-2 | F-2 | G-1 | 305 | 29 | Drag angle 0° | 30 | 295 | 30 | Push angle 25° | 35 |
| No. 9 | B-1 | W-2 | F-3 | G-1 | 490 | 30 | Drag angle 0° | 25 | 475 | 31 | Push angle 25° | 30 |
| No. 10 | B-1 | W-1 | F-3 | G-1 | 350 | 29 | Drag angle 0° | 35 | 340 | 30 | Push angle 25° | 40 |
| No. 11 | B-1 | W-3 | F-2 | G-1 | 435 | 30 | Drag angle 0° | 25 | 420 | 31 | Push ange 25° | 30 |
| No. 12 | B-1 | W-3 | F-2 | G-1 | 435 | 30 | Drag angle 5° | 30 | 420 | 31 | Push angle 45° | 35 |
| No. 13 | B-1 | W-3 | F-3 | G-1 | 380 | 30 | Drag angle 0° | 20 | 370 | 31 | Push angle 25° | 25 |
| No. 14 | B-1 | W-3 | F-1 | G-1 | 405 | 30 | Drag angle 5° | 25 | 395 | 31 | Push angle 45° | 30 |

(continued)

| No. | Base metal | Wire | Flux | Groove shape | Leading electrode | | | | Trailed electrode | | | |
|---|---|---|---|---|---|---|---|---|---|---|---|---|
| | | | | | Welding current (A) | Arc voltage (V) | Tip angle ° | Tip-Base metal distance mm | Welding current (A) | Arc voltage (V) | Tip angle (°) | Tip-Base metal distance (mm) |
| No. 15 | B-1 | W-3 | F-1 | G-2 | 365 | 29 | Drag angle 0° | 25 | 355 | 30 | Push angle 25° | 30 |

[Table 5]

| No. | Leading electrode Wire feed speed (g/min) | Trailed electrode Wire feed speed (g/min) | Welding speed (cm/min) | Welding amount per unit length (g/cm) | Slag removability | Bead state | Welding efficiency | Resistance to hot cracking |
|---|---|---|---|---|---|---|---|---|
| No. 1 | 45 | 60 | 30 | 3.5 | P | P | P | P |
| No. 2 | 55 | 65 | 35 | 3.4 | P | P | P | P |
| No. 3 | 65 | 72 | 45 | 3.0 | P | P | P | P |
| No. 4 | 60 | 68 | 45 | 2.8 | P | P | P | P |
| No. 5 | 70 | 78 | 45 | 3.3 | P | P | P | P |
| No. 6 | 85 | 105 | 55 | 3.5 | P | P | P | P |
| No. 7 | 75 | 110 | 50 | 3.7 | P | P | P | P |
| No. 8 | 40 | 50 | 40 | 2.3 | P | F Penetration failure | - | - |
| No. 9 | 100 | 125 | 40 | 5.6 | F | - | - | F |
| No. 10 | 55 | 67 | 20 | 6.1 | P | P | P | F |
| No. 11 | 70 | 105 | 65 | 2.7 | P | F Unstable bead shape | - | - |
| No. 12 | 80 | 110 | 40 | 4.8 | P | P | P | F |
| No. 13 | 55 | 85 | 55 | 2.5 | P | P | F | - |
| No. 14 | 75 | 95 | 40 | 4.3 | P | P | P | F |
| No. 15 | 52 | 68 | 30 | 4.0 | P | P | P | F |

As shown in Tables 4 and 5, Examples No. 1 to No. 7 satisfied the scope of the present invention and had no problems with the slag removability, bead state, and welding efficiency as well as no hot cracking.

In Comparative Example No. 8, the wire feeding speeds of the leading electrode and the trailed electrode deviated from the respective lower limits specified by the present invention. In Example No. 8, the welding current was low and the wire feeding speed was low, making the arc unstable, causing the penetration failure in an interface between the groove surface and the bead. Furthermore, the welding amount per unit length deviated from the lower limit specified by the present invention. Since the bead state was unsatisfactory, the welding efficiency and the resistance to hot cracking were not evaluated.

In Comparative Example No. 9, the wire feeding speeds of the leading electrode and the trailed electrode deviated from the respective upper limits specified by the present invention. The welding current was high and the wire feeding speed was high, making the welding amount too much, causing hot cracking, thereby reducing the slag removability. Furthermore, the welding amount per unit length deviated from the upper limit of the present invention, causing the hot cracking. Since the slag removability was unsatisfactory, the bead state and the welding efficiency were not evaluated.

In Comparative Example No. 10, the welding speed deviated from the lower limit specified by the present invention. Since the welding speed was low, the welding amount became extremely large, causing hot cracking. Furthermore, the welding amount per unit length deviated from the upper limit of the present invention, causing the hot cracking.

In Comparative Example No. 11, the welding speed deviated from the upper limit specified by the present invention. Thus, the feed of the wire could not catch up with the welding speed, making the bead width unstable. Furthermore, the welding amount per unit length deviated from the lower limit specified by the present invention. Since the bead state was unsatisfactory, the welding efficiency and the resistance to hot cracking were not evaluated.

In Comparative Examples No. 12, No. 14 and No. 15, the welding amount per unit length deviated from the upper limit specified by the present invention. Thus, the bead shape became close to a pear shape, causing hot cracking.

In Comparative Example No. 13, the welding amount per unit length deviated from the lower limit specified by the present invention. Since the welding amount was small, the number of welding steps on the inside of the groove was increased, degrading the welding efficiency. Since the welding efficiency was unsatisfactory, the evaluation of the resistance to hot cracking was not evaluated.

While the present invention has been described above in detail by referring to the embodiments and examples, it is to be understood that the present invention is not limited to the contents mentioned above, and that the scope of the present invention is defined by the appended claims.

[Description of Reference Numerals]

10: Base metal (Material to be welded)
11a, 11b, 30: Welding tip
12a, 12b, 40: Welding wire
13a, 13b, 30a: Leading end
15a: Leading electrode
15b: Trailed electrode
20, 20A: Specimen

**Claims**

1. A tandem submerged arc welding method of a high-Cr Creep Strength-Enhanced Ferritic (CSEF) steel, wherein the Cr content of this steel is 8% by mass or more, the method being **characterised by** : welding under the conditions at a wire feeding speed $V_L$ of a leading electrode (15a) of 45 to 90 g/min; a wire feeding speed $V_T$ of a trailed electrode (15b) of 60 to 110 g/min; a welding speed v of 30 to 55 cm/min; and a welding amount per unit length of 2.8 to 3.8 g/cm.

2. The method according to claim 1, wherein the welding wire (12a, 12b, 40) comprises
   0.03 to 0.13% by mass of C,
   0.05 to 0.50% by mass of Si,
   0.50 to 2.20% by mass of Mn,
   0.015% by mass or less of P,
   0.010% by mass or less of S,
   more than 0.20% by mass and 1.00% by mass or less of Ni,
   8.00 to 10.50% by mass of Cr,
   0.20 to 1.20% by mass of Mo,
   0.05 to 0.45% by mass of V,
   0.020 to 0.080% by mass of Nb, and
   0.02 to 0.08% by mass of N,
   with the balance being Fe and inevitable impurities.

3. The method according to claim 2, wherein the welding wire (12a, 12b, 40) further comprises at least one of Cu, B, W and Co, in which a Cu content is 1.70% by mass or less, a B content is 0.005% by mass or less, a W content is 2.0% by mass or less and a Co content is 3.0% by mass or less, with the balance being Fe and inevitable impurities.

4. The method according to claim 2 or 3, wherein a welding flux comprises
10 to 60% by mass of $CaF_2$,
2 to 25% by mass of CaO,
10 to 50% by mass of MgO,
2 to 30% by mass of $Al_2O_3$, and
6 to 30% by mass of Si and $SiO_2$ in total (in terms of $SiO_2$),
and a basicity represented by the following formula is in a range of 2.3 to 2.7:

$$Basicity = (CaF_2 + CaO + MgO + SrO + Na_2O + Li_2O + 1/2(MnO + FeO))/(SiO_2 + 1/2(Al_2O_3 + TiO_2 + ZrO_2))$$

where each compound indicates a content (% by mass) of the compound relative to the total mass of the flux.

5. The method according to claim 4, wherein a distance (L) between a tip (11a, 11b, 30) and a base metal (10) is in a range of 20 to 40 mm.

6. The method according to claim 5, wherein tip angles are set such that a drag angle $\alpha$ is in a range from 0° to 50°, and a push angle $\beta$ is in a range from 0° to 50°.

7. The method according to claim 6, wherein a tip shape is a straight tubing shape or a bent square tubing shape.

**Patentansprüche**

1. Tandem-Unterpulverschweißverfahren von kriechfestigkeitsverbessertem ferritischen (CSEF) Stahl mit hohem Cr, wobei der Cr-Anteil dieses Stahls 8 Masse-% oder mehr beträgt, wobei das Verfahren **gekennzeichnet ist durch**: Schweißen unter den Bedingungen bei einer Drahtvorschubgeschwindigkeit $V_L$ einer Führungselektrode (15a) von 45 bis 90 g/min, einer Drahtvorschubgeschwindigkeit $V_T$ einer gezogenen Elektrode (15b) von 60 bis 110 g/min, einer Schweißgeschwindigkeit v von 30 bis 55 cm/min und einer Schweißmenge pro Längeneinheit von 2,8 bis 3,8 g/cm.

2. Verfahren gemäß Anspruch 1, wobei der Schweißdraht (12a, 12b, 40) umfaßt
0,03 bis 0,13 Masse-% C,
0,05 bis 0,50 Masse-% Si,
0,50 bis 2,20 Masse-% Mn,
0,015 Masse-% oder weniger P,
0,010 Masse-% oder weniger S,
mehr als 0,20 Masse-% und 1,00 Masse-% oder weniger Ni,
8,00 bis 10,50 Masse-% Cr,
0,20 bis 1,20 Masse-% Mo,
0,05 bis 0,45 Masse-% V,
0,020 bis 0,080 Masse-% Nb, und
0,02 bis 0,08 Masse-% N,
wobei der Rest Fe und unvermeidbare Verunreinigungen sind.

3. Verfahren gemäß Anspruch 2, wobei der Schweißdraht (12a, 12b, 40) weiter mindestens eines von Cu, B, W und Co umfaßt, worin ein Cu-Anteil 1,70 Masse-% oder weniger ist, ein B-Anteil 0,005 Masse-% oder weniger ist, ein W-Anteil 2,0 Masse-% oder weniger ist und ein Co-Anteil 3,0 Masse-% oder weniger ist, wobei der Rest Fe und unvermeidbare Verunreinigungen sind.

4. Verfahren gemäß Anspruch 2 oder 3, wobei ein Schweißflussmittel umfaßt
10 bis 60 Masse-% $CaF_2$,
2 bis 25 Masse-% CaO,
10 bis 50 Masse-% MgO,
2 bis 30 Masse-% $Al_2O_3$, und

6 bis 30 Masse-% Si und $SiO_2$ im Gesamten (bezogen auf $SiO_2$),
und eine Basizität, dargestellt durch die folgende Formel, in einem Bereich von 2,3 bis 2,7 ist:

$$\text{Basizität} = (CaF_2 + CaO + MgO + SrO + Na_2O + Li_2O + 1/2(MnO + FeO))/(SiO_2 + 1/2(Al_2O_3 + TiO_2 + ZrO_2))$$

wobei jede Verbindung einen Anteil (Masse-%) der Verbindung relativ zu der Gesamtmasse des Flussmittels anzeigt.

5. Verfahren gemäß Anspruch 4, wobei ein Abstand (L) zwischen einer Spitze (11a, 11b, 30) und einem Basismetall (10) in einem Bereich von 20 bis 40 mm ist.

6. Verfahren gemäß Anspruch 5, wobei die spitzen Winkel derart eingestellt sind, dass ein Zugwinkel $\alpha$ in einem Bereich von 0° bis 50° ist und ein Druckwinkel $\beta$ in einem Bereich von 0° bis 50° ist.

7. Verfahren gemäß Anspruch 6, wobei eine Spitzenform eine gerade Rohrform oder eine gebogene quadratische Rohrform ist.

**Revendications**

1. Procédé de soudage à l'arc submergé tandem d'un acier Creep Strength-Enhanced Ferritic (CSEF) à haute teneur en Cr, où la teneur en Cr de cet acier est de 8% en masse ou plus, le procédé étant **caractérisé par** :
le soudage dans des conditions de vitesse d'alimentation du fil $V_L$ d'une électrode de tête (15a) de 45 à 90 g/min ; une vitesse d'alimentation du fil $V_T$ d'une électrode suiveuse (15b) de 60 à 110 g/min ; une vitesse de soudage v de 30 à 55 cm/min, et une quantité de soudure par unité de longueur de 2,8 à 3,8 g/cm.

2. Procédé selon la revendication 1, dans laquelle le fil à souder (12a, 12b, 40) comprend
0,03 à 0,13% en masse de C,
0,05 à 0,50% en masse de Si,
0,50 à 2,20% en masse de Mn,
0,015% en masse ou moins de P,
0,010% en masse ou moins de S,
plus de 0,20% en masse et 1,00% en masse ou moins de Ni,
8,00 à 10,50% en masse de Cr,
0,20 à 1,20% en masse de Mo,
0,05 à 0,45% en masse de V,
0,020 à 0,080% en masse de Nb, et
0,02 à 0,08% en masse de N,
le reste étant du fer et d'inévitables impuretés.

3. Procédé selon la revendication 2, dans lequel le fil à souder (12a, 12b, 40) comprend en outre, au moins l'un parmi Cu, B, W et Co, dans lequel la teneur en Cu est de 1,70% en masse ou moins, la teneur en B est de 0,005% en masse ou moins, la teneur en W est de 2,0% en masse ou moins et la teneur en Co est de 3,0% en masse ou moins, le reste étant du fer et d'inévitables impuretés.

4. Procédé selon la revendication 2 ou 3, dans lequel le flux de soudage comprend
10 à 60% en masse de $CaF_2$,
2 à 25% en masse de CaO,
10 à 50% en masse de MgO,
2 à 30% en masse de $Al_2O_3$,
6 à 30% en masse de Si et SiO2 au total (en termes de $SiO_2$),
et une basicité représentée par la formule suivante située dans l'intervalle allant de 2,3 à 2,7 :

$$\text{Basicité} = (CaF_2 + CaO + MgO + SrO + Na_2O + Li_2O + \tfrac{1}{2}(MnO + FeO))/(SiO_2 + \tfrac{1}{2}(Al_2O_3 + TiO_2 + ZrO_2))$$

où chaque composé indique la teneur (% en masse) du composé par rapport à la masse totale du flux.

5. Procédé selon la revendication 4, dans lequel la distance (L) entre une pointe (11a, 11b, 30) et un métal de base (10) se situe dans l'intervalle allant de 20 à 40 mm.

6. Procédé selon la revendication 5, dans lequel les angles de pointe sont réglés de sorte que l'angle de trainée $\alpha$ se situe dans l'intervalle allant de 0° à 50°, et l'angle de poussée $\beta$ se situe dans l'intervalle allant de 0° à 50°.

7. Procédé selon la revendication 6, dans lequel la forme de la pointe est une forme tubulaire droite ou une forme tubulaire carrée courbée.

## Fig.1

WELDING DIRECTION

## Fig.2

Fig.3

30

30a

Fig.4

30a

*Fig.5*

WELDING DIRECTION

$\alpha$

30

30a

40

L

10

*Fig.6*

WELDING DIRECTION

$\beta$

30a

30

40

L

10

*Fig.7*

WELDING DIRECTION

30

30a

40

L

10

$\alpha = 0°$, $\beta = 0°$

## Fig.8

WELDING DIRECTION

$\alpha$

30
30a
40 $\updownarrow$ L
10

## Fig.9

WELDING DIRECTION

$\beta$

30a
30
40
L
10

## Fig.10

WELDING DIRECTION

30
30a
40 L
10

$\alpha = 0° \, . \; \beta = 0°$

*Fig.11*

*Fig.12*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005329415 A
- EP 2532466 A2
- JP 60177966 A
- JP S62198758827 B